# EUROPEAN PATENT APPLICATION

(11) **EP 2 891 511 A1**
(43) Date of publication of application: **08.07.2015**
(21) Application number: 13194099.1
(22) Date of filing: 22.11.2013
(51) Int. Cl.: B01D 19/02, B01D 19/04, C08F 110/02, C08F 2/06

(54) **Ethylene-based polymer as a defoamer additive**

(71) Applicant: BYK-Chemie GmbH, 46483 Wesel (DE)
(72) Inventor: Bessel, Michael, 40625 Düsseldorf (DE); Mecking, Stefan, 78464 Konstanz (DE); Wiedemann, Thomas, 78467 Konstanz (DE); Frank, Albert, 46509 Xanten (DE); Omeis, Jürgen, 46286 Dorsten-Lembeck (DE); Tchernook, Alexandra, 78465 Konstanz (DE); Göttker-Schnetmann, Inigo, 78462 Konstanz (DE)
(74) Representative: Leifert & Steffan

(57) **Abstract**

The present invention relates to monounsaturated polymers prepared by homopolymerization of ethylene as the only monomer, and having one carbon-carbon double bond per polymer chain, a degree of branching ranging from 10 to 500 branches per 1000 carbon atoms and a number average molecular weight from 300 to 10,000 g/mol, and having a branching pattern comprising: 60 to 85 % methyl branches, 4 to 10 % ethyl branches, 2 to 4.5 % n-propyl branches, 3 to 15 % secondary butyl branches, and 2 to 15 % n-butyl branches and alkyl branches containing more than 4 carbon atoms, except for secondary butyl branches. The present invention further relates to polymers obtained by reacting the carbon carbon double bond of the monounsaturated polymers. The invention further relates to the manufacture of the polymers, the use of the polymers in defoamer formulations, the thus obtained defoamer formulations and their use as well as liquid compositions containing the polymers of the present invention.

## Description

The present invention relates to the preparation and use of polymers, prepared by homopolymerization of ethylene, and compositions containing these as defoamers in industrial applications such as formulations of coatings, paints, flooring and cold cure resins.

### BACKGROUND OF THE INVENTION

Defoamers are compositions widely used in coating and paint applications as well as in the petroleum and mining industries, paper-making, textiles, for water, food and beverage treatment and agriculture. One more example is the use of defoamers in the emulsion polymerization process which requires complete suppression of foam formation.

Usually, a defoamer composition includes a carrier liquid, one or more defoaming agents and additives. A defoaming agent means in the present invention a substance that is active in destroying foam or helps in releasing air inclusions, especially, but not limited to, coatings, paints, flooring and resin formulations.

As carrier liquids very often inexpensive mineral oils and their mixtures or water are used. A multiplicity of defoaming agents such as minerals oils, hydrophobic polyoxyalkylenes, long-chain alcohols and/or their alkoxylates, hydrophobic polyacrylates, silicone oils and mixtures of these components or emulsions thereof are already state of the art. It is well-known that the activity of a defoamer formulation can significantly be increased by the addition of hydrophobic solids which promote the dewetting and collapsing of foam lamellae. Suitable hydrophobic solids are hydrophobic silica, metal stearates, amide waxes, ureas and urea derivatives, which commonly are dispersed in petrol-based carriers or water-based compositions. Especially, when water is used as a very cost-efficient co-carrier, the defoamer formulation contains for example emulsifiers or rheology control additives for stabilization of the composition. US-A-2010/0096583 describes the preparation of a defoamer for aqueous media containing a hydrophobic amide wax. Other examples of common defoamer formulations can be found in US 5,082,590; US 5,096,617 and US 5,071,591 and in EP 1044712 and EP 1007491, for instance. Defoamer compositions containing environmentally hazardous fluoro compounds, such as described in the EP 0407874, are almost outdated, today.

Typically, the defoamer formulations comprise an amount of about 2 to 10% by weight of a defoaming agent. This is mainly driven by technical problems such as solubility or stability of the formulation and economic reasons such as raw material costs and selling price targets. Very often the inexpensive paraffinic or cyclo-paraffinic carrier liquids or water are present in an amount of around 80% by weight or more in the defoamer formulation. Additionally, up to around 10% by weight of emulsifiers and/or stabilizers are contained in a defoamer formulation.

The state of the art provides numerous processes to prepare stable fine dispersions or emulsions of defoamer compositions that contain hydrophobic solids or silicone oils. However, often these procedures are complicated and costly. Another major disadvantage of these defoaming formulations is the risk of settling or precipitation of the hydrophobic solids or the silicone oils from the carrier medium and reduced storage stability.

Defoamer compositions containing hydrophobic polyacrylates and/or polyalkoxylates are much easier to prepare and usually more stable towards settling or phase separation when stored. However, because of their relatively good compatibility with coatings they often are less effective compared to other defoamer agents.

It is an objective of the present invention to provide efficient defoaming agents suitable for controlling foam in a broad range of coatings, paints or resin formulations. Moreover, the defoamer formulation ought to be technically easy to prepare, made from inexpensive and environmentally acceptable raw materials and should exhibit good storage stability with a minimum risk of settling or phase separation.

Surprisingly, it was found by the inventors of the present invention that specific branched polyolefins of relatively low number average molecular weight and a specific branching pattern are very effective as defoaming agents and show a good balance of raw material costs, simplicity of the preparation procedure and storage stability.

The term "hyperbranched polymer" when used herein means a polymer that comprises branches alongside the polymer chain and that statistically one or more of these branches exhibit additional branches, themselves. Highly branched polymers comprising "branch-on-branch" elements are referred to as dendritic. Within this realm, perfectly branched polymers are referred to as dendrimers. They contain, apart from a core unit, only branched repeating units and end groups. So-called hyperbranched polymers are also dentritic, but they contain linear repeating units in addition to branched repeating units and end groups. In the present invention, the branching of the disclosed polymers is characterized by the number of branches in reference to 1000 carbon atoms, determined by NMR.

The polymers of the present invention are hyperbranched polyhydrocarbons with only one functional group. To a person of ordinary skill in the art, the Shell Higher Olefin Process and the Ziegler-Alfol process are most familiar, which yield strictly linear ethylene oligomers or strictly linear polyethylenes. However, the preparation of branched polyolefins of high molecular weight using Nickel catalysts was shown in WO 98/30609, for instance. Furthermore, scientific literature discloses high molecular weight branched polyethylenes prepared by using Pd catalysts, as described by R. Subramanian and coworkers in Polymer 52 (2011) page 5027-5039 and polymers of lower molecular weight prepared from olefin mixtures, described in the US 6,468,948 and WO 94/19436. Branched homopolymers of ethylene with largely differing molecular weights and various different degrees of branching are described by Zuideveld and coworkers in Angew. Chem. 116 (2004) 887-891, Göttker-Schnetmann and coworkers in Organometallics 26 (2007) 2348-2362 and Osichow and coworkers in Organometallics 32 (2013) 5239-5242. In addition, high molecular weight graft-copolymers prepared by complicated multi-step transition metal catalyzed polymerizations, as described in US 2007/010626 or US-A-2004072950, are known. Such high molecular weight polymers are used, for example, as packaging or membrane materials, see EP 0805826.

Other branched polyolefins are accessible by degradation procedures of high molecular weight polyolefins, as described, for example, in US 3845157, or by a combination of such with polymerization procedures, as described, for example, in EP 0620264, as well.

### DETAILED DESCRIPTION OF THE INVENTION

The inventions objective was to provide efficient defoaming agents suitable for controlling foam in a broad range of coatings, paints or resin formulations. Those agents should be easily prepared and easy to formulate into defoamer formulations made from inexpensive and environmentally acceptable raw materials. Furthermore those formulations should possess good storage stability with a minimum risk of settling or phase separation. The problems addressed in the following invention were solved by providing a monounsaturated polymer prepared by homopolymerization of ethylene as the only monomer, and having
(a) one carbon-carbon double bond per polymer chain
(b) a degree of branching ranging from 10 to 450 branches per 1000 carbon atoms; and
(c) a number average molecular weight from 500 to 10,000 g/mol, and
(d) a branching pattern comprising:
   i. 60 to 85 % methyl branches
   ii. 4 to 10 % ethyl branches
   iii. 2 to 4.5 % n-propyl branches
   iv. 3 to 15 % secondary butyl branches, and
   v. 2 to 15 % n-butyl branches and alkyl branches containing more than 4 carbon atoms, except for secondary butyl branches; and
   the degree of branching, the number average molecular weight and the branching pattern being determined by NMR spectroscopy.

Such polymers are designated as the monounsaturated polymers of the present invention.

The term "polymer" as used herein characterizes a substance consisting of a plurality of polymer molecules, therefore any parameters and values defined and determined in relation to the polymers are represented by average numbers obtained for the polymer, i.e. the substance rather than single polymer molecules.

The term "homopolymer" characterizes a substance, which consists of polymer molecules that were prepared from only one kind of monomer. The polymerization reaction that makes use of only one kind of monomer is therefore called "homopolymerization". The nomenclature of the term "homopolymer" is obviously based on the process of producing the polymer from a single kind of monomer and is a *priori* silent with respect to the structure of the polymer resulting from such homopolymerization.

The term "branching pattern" as used within the present invention is characterized by the percentage ranges of each type of branches present in the polymer, namely the percentage of methyl, ethyl, n-propyl, secondary butyl, n-butyl (other than secondary butyl) and alkyl branches containing more than 4 carbon atoms, each percentage value being calculated on the basis of the total number of branches.

The specific degree of branching and the branching pattern as well as the number average molecular weight of the hyperbranched polymers of the present invention differ from state-of-the-art polyolefins as a result of their specific process of preparation from the monomer ethylene, exclusively, and by the use of certain transition metal catalysts.

The polymers of the present invention exhibit a relatively low number average molecular weight Mₙ determined by NMR, from 500 to 10,000 g/mol, preferably from 600 to 5,000 g/mol, more preferably from 800 to 2,900 g/mol.

The polymers of the present invention are featured by their specific number and type of branches in reference to 1000 carbon atoms. The inventive polymers comprise from 10 to 450 branches per 1000 carbon atoms, preferably from 50 to 200 branches per 1000 carbon atoms, and more preferably from 60 to 100 branches per 1000 carbon atoms and most preferably from 70 to 100 branches per 1000 carbon atoms. The number of branches (i.e. CH units) is determined by NMR as described in the Experimental Section.

Additionally, the polymers of the present invention possess a certain combination of different types of branches and hyperbranches. In detail, the total amount of branches and hyperbranches of the disclosed polymers comprises 60 to 85, preferably 60 to 82 and most preferably 65 to 80% methyl branches, 4 to 10, preferably 6 to 10 and most preferably 7 to 10 % ethyl branches, 2 to 4.5, preferably 2.5 to 4.5 and most preferably 3 to 4 % n-propyl branches, 2 to 15, preferably 5 to 15 and most preferably 8 to 14 % of n-butyl branches (other than secondary butyl groups) or branches of even higher chain length and 3 to 15, preferably 5 to 12 and most preferably 6 to 10 % of secondary butyl branches. In general, a relatively high content of hyperbranches is beneficial for the polymers application as defoaming agent.

Furthermore, the disclosed polymers preferably exhibit a polydispersity index PDI = M_{w}/Mₙ between 1.0 and 10.0, preferably from 1.1 to 3.5, especially preferable from 1.2 to 2.0. Herein, the PDI is determined by GPC as described in the Experimental Section.

It is very specific that the inventive polyethylenes exclusively comprise one unsaturated group per polymer chain such as one terminal carbon-carbon double bond or one vinyl group or one internal double bond. Except for one unsaturated group, the polymer chains and the branches do not comprise other carbon-carbon double or triple bond moieties or carbon-hetero atom double bonds and thus are saturated, except for the one carbon carbon double bond.

### Chemically modified polymers of the invention

The above-described monounsaturated polymers of the invention are suitable as defoaming agents without any further modification. However, they are also useful precursor compounds for the manufacture of further improved and/or specialized defoaming agents. Due to the presence of the single carbon-carbon double bond per polymer chain, the monounsaturated polymers are apt to react with chemical compounds that are reactive with carbon-carbon double bonds by forming functionalized derivatives of the above described monounsaturated polymers of the invention.

In general, all functionalization methods and chemical reactions of carbon-carbon double bonds, for example hydrogenation, thio-ene reactions, hydrosilylations and other addition reactions, radical reactions, cationic and anionic polymerizations, epoxydations, metathesis reactions with other olefines and the like, are possible.

The chemically modified polymers of the invention can be used in the same manner and the same kind of formulations as described for the monounsaturated polymers of the present invention. Therefore the term "polymers of the present invention" as used herein encompasses the monounsaturated polymers of the present invention as well as the chemically modified polymers of the present invention.

### Process for the manufacture of the monounsaturated polymers of the present invention

The process according to which the monounsaturated polymers of the present invention can be obtained is a further object of the present invention and will be called process of the invention in the following sections.

The process of the invention is a homopolymerization reaction of ethylene as the single monomer. The homopolymerization reaction usually takes place at a temperature in the range of 10 to 200 °C, preferably 20 to 100 °C, more preferably 30 to 80 °C and most preferred 35 to 65 °C. Furthermore it is preferred to carry out the reaction at a pressure in the range of 1 to 200 bar, more preferred 2 to 100 bar and most preferred 5 to 45 bar.

The process of the present invention is preferably carried out under inert gas atmosphere, for instance argon or nitrogen atmosphere.

The homopolymerization reaction of ethylene is preferably carried out in the presence of an inert solvent, in which the catalyst is dissolved. A typical duration of this reaction is 1 hour, however reaction times from 1 min to 24 h, preferably 30 min to 3 h are also suitable.

In particular, aliphatic and aromatic hydrocarbons are suitable solvents, preferentially aliphatics and distillates thereof, comprising fractions with carbon atom numbers of from 4 to 300. Non-exclusive examples are butane, mixtures of hexane isomers, mixtures of octane isomers or diesel oil fractions. Moreover, aromatic hydrocarbons, such as toluene or xylenes, mixtures thereof and preferably distillates and fractions of higher aromatic hydrocarbons are suitable solvents.

Catalyst compositions suitable for the preparation of monounsaturated polymers of the present invention contain a highly active late transition metal center such as a Pd or a Ni atom. Preferentially, the transition metal component is a Ni(ii)-carboxylate complex and more preferentially a Ni(ii)-acetate complex with or without co-ligands.

Additionally, the catalytically active composition which can be employed in the process of the present invention comprises an organic chelating ligand of the class of salicylaldimines, preferentially N-aryl salicylaldimines, or other neutral or anionic N,O-chelating ligands that is bound to the transition metal. In general, the N-aryl moiety of the salicylaldimines is substituted, preferably with methyl or methoxy groups, more preferably with methyl groups. The N-aryl substituents of the salicylaldimine ligand exhibit an influence on the number and type of branches on the disclosed polyethylenes. An example of a suitable salicylaldimine for the polymerization of ethylene is 3,5-diiodo-N-[2,6-bis(3,5-dimethylphenyl)-phenyl]salicylaldimine.

The disclosed catalytically active composition contains organometallic compounds. An organometallic compound is preferably an s-block metal alkyl compound and more preferentially, a Li-alkyl compound and even more preferentially methyl lithium. The organo-metallic component, the transition metal complex and the chelating organic ligand together form the catalytically active species when they are combined.

A preferred catalyst to be used in the process of the present invention is obtained by mixing
(a) a Pd(II) or Ni (II) carboxylate complex, with
(b) a neutral or anionic N,O-chelating ligand, and
(c) an organometallic compound other than (a).

A particularly preferred catalyst to be used in the process of the present invention is obtained by mixing
(a) a Pd(II) or Ni (II) carboxylate complex, most preferred a Ni(II) carboxylate complex and even further preferred a Ni(II) acetate complex, and
(b) a ligand of the class of salicylaldimines, preferably N-aryl substituted salicylaldimines and particularly preferred N-aryl substituted salicylaldimines, wherein the N-aryl moiety is substituted with methyl or methoxy groups, preferably methyl groups and most preferably N-aryl stands for N-phenyl in the before-mentioned embodiments and
(c) a main group alkyl compound, most preferred an alkyl lithium, and even further preferred methyl lithium.

The invention further describes the beneficial in-situ synthesis of salicylaldiminato-Ni(II)-alkyl complexes and their use as ethylene polymerization catalysts in situ. Hereby, the reaction of a Ni-carboxylate complex with an organometallic compound and a salicylaldimine is disclosed. Preferentially, the catalyst is not isolated, but used directly for the polymerization of ethylene and more preferentially, no intermediates, such as [(N,N'-tetramethyl-ethylenediamine)Ni(Alkyl)₂] and other Ni-Alkyls, are isolated and no purification procedures during the synthesis of the in-situ catalyst composition are applied.

### Defoamer formulations and use of the polymers of the present invention as defoamers or in defoamer formulations

A further object of the present invention is a defoamer formulation or defoamer composition, comprising or consisting of one or more polymers according to the present invention.

The defoamer formulations of the present invention preferably comprise or consist of
(A) one or more of the polymers according to the present invention,
(B) a carrier liquid, which differs from (A), and
(C)optionally one or more additives which are different from (A) and (B) and are selected from the group consisting of stabilizers, rheology control additives and hydrophobic solids, the hydrophobic solids being selected from the group consisting of hydrophobic silica, metal stearates, amide waxes and ureas.

The carrier liquid can be a single liquid compound or a mixture of liquid compounds. Preferably the carrier liquid is selected from organic solvents, organic diluents and mixtures of organic solvent and/or organic diluent. Generally the same organic solvents or diluents can be used that are suitable in the process for preparing the polymers according to the present invention. In many cases it is preferred to choose the organic solvents or diluents having regard to the field of application of the defoamer formulation. In general aprotic solvents and diluents and their mixtures are suitable as carrier liquids. Particularly preferred are aliphatic and/or aromatic hydrocarbons, and most preferred are those already mentioned above for the homopolymerization method used for preparing the polymers of the invention.

In the defoamer formulations of the present invention the (A) one or more of the polymers according to the present invention are preferably contained in an amount of 0.01 to 90, more preferably 0.5 to 50 and most preferable 10 to 40 % by weight, based on the total weight of the defoamer formulation. The carrier liquid (B), which differs from (A), is preferably contained in an amount of 10 to 99.9, more preferably 50 to 90 and most preferably 60 to 80 % by weight, based on the total weight of the defoamer formulation. The optionally contained one or more additives (C) which are different from (A) and (B) are selected from the group consisting of stabilizers, rheology control additives and hydrophobic solids, the hydrophobic solids being selected from the group consisting of hydrophobic silica, metal stearates, amide waxes and ureas, are preferably contained in an amount of 0 to 10, such as 0.1 to 10, more preferably 0.1 to 1 % by weight. In a particularly preferred embodiment of the present invention the defoamer formulation consists of (A) and (B).

A further object of the present invention is the use of the polymers of the invention as defoaming agents and/or in the manufacture of the above described defoaming formulations. Generally the polymers of the present invention are used as defoaming agents in liquid compositions, preferably liquid compositions selected from coatings, paints, flooring formulations and resin formulations. Preferably the polymers of the present invention are used as defoaming agents in an amount from 0.01 to 5, more preferably 0.05 to 2 and most preferably 0.1 to 1 % by weight based on the total weight of the total weight of liquid composition.

Yet another object of the present invention is the use of a defoamer formulation as a foam preventing or foam reducing additive in the manufacture of liquid compositions, preferably liquid compositions selected from coatings, paints, flooring formulations and resin formulations. Preferably the defoamer formulation is used in such amount that the therein contained polymers of the present invention are contained in the liquid composition in an amount from 0.01 to 5, more preferably 0.05 to 2 and most preferably 0.1 to 1.0 % by weight based on the total weight of the liquid composition.

Another object of the present invention is a liquid composition containing the polymers of the present invention in an amount from 0.01 to 5, more preferably 0.05 to 2 and most preferably 0.1 to 1 % by weight based on the total weight of the liquid composition. Particularly preferred liquid compositions are coatings, paints, flooring formulations and resin formulations.

In the following the invention will be further described by means of examples.

### Experimental Section

All manipulations of air-sensitive and moisture-sensitive substances were carried out using standard Schlenk, vacuum, and glovebox techniques under argon or nitrogen. Solvents were dried and degassed using standard laboratory techniques.

The identity and purity of metal complexes was established by ¹H, ¹³C NMR, and elemental analysis. NMR spectra were recorded on a Varian Unity Inova 400, a Bruker Avance III 400 or a Bruker Avance III 600 spectrometer. ¹H chemical shifts were referenced to the residual proton signal of the solvent. ¹³C chemical shifts were referenced to the carbon signal of the solvent. NMR assignments were confirmed by ¹H, ¹H gCOSY, ¹H, ¹³C gHSQC and ¹H, ¹³C gHMBC experiments.

Polymer ¹³C NMR spectra were measured with proton decoupling at 25 °C or 130 °C with addition of 5 mg mL⁻¹ Cr(acac)₃ in CDCl₃ or C₂D₂Cl₄, respectively. The determination at 25 °C can be used for compounds that are soluble at this temperature. However the results are the same as for 130 °C. Since the measurement can be carried out for all Examples at 130 °C, this temperature is the temperature of choice. For reliable integration all spectra were recorded inverse gated without NOE using a relaxation delay of 2s. Polymer molecular weights were determined by ¹H NMR spectroscopy and the molecular weight distribution (M_{w}/Mₙ) was determined by GPC on a *Polymer Laboratories PL-GPC 50* instrument with two PL_{GEL} 5 µm *MIXED-C* columns and an RI-detector in THF at 50 °C against polystyrene standards. For polymers not soluble in THF at 50 °C high temperature GPC was applied. Measurements were carried out in 1,2,4-trichlorobenzene at 160 °C at a flow rate of 1 mL min⁻¹ using a *Polymer Laboratories GPC 220* instrument equipped with PL_{GEL} *Olexis* columns with differential refractive index-, viscosity- and light scattering- (15° and 90 °) detectors. Data reported were determined via the RI-detector against linear polyethylene standards. Elemental analyses were performed on an Elementar vario MICRO cube instrument.

### Example 1

### Preparation of a Salicylaldimine ligand

### 3,5-Diiodo-N-[2,6-bis(3,5-dimethylphenyl)-phenyl]salicylaldimine

Under air N-[2,6-bis(3,5-dimethylphenyl)-phenyl]-amine (603 mg, 1.7 mmol, 1.0 eq.), 3,5-Diiodosalicylaldehyde (631 mg, 1.7 mmol, 1.0 eq) and *p*-Toluenesulfonic acid (7 mg, 41 µmol, 24 mol %) were suspended in 25 mL Methanol and heated to 65 °C for 30 minutes while all starting materials dissolved. The reaction was stirred for 15 hours at room temperature. After cooling the reaction to 0 °C, the orange product was filtered off and washed with small portions of cold methanol. The product was dissolved in pentane to filter off residual aldehyde and then dried in vacuum. The product was obtained as an orange solid (1.0 g, 1.4 mmol, 84 %).

### Example 2

### Conventional preparation of a Catalyst

In a Schlenk flask a mixture of the salicylaldimine prepared in example 1 (71 mg, 100 µmol, 1.0 eq), [(N,N'-tetramethyl-ethylenediamine)Ni(CH₃)₂] (25 mg, 120 µmol, 1.2 eq) and 20 eq pyridine was dissolved in 10 mL of benzene and the solution was stirred for 1 hour at room temperature. The dark red solution was filtered via a syringe filter to remove Ni⁰ and benzene was sublimated in vacuum. The orange solid was washed with methanol and pentane at -80 °C and dried in vacuum to give the catalyst as an orange powder (188 mg, 217 µmol, 78 %).

### Example 3

### Preparation of the in-situ catalytically active composition (preferred)

To a cooled (-40 °C) suspension of [(N,N'-tetramethyl-ethylenediamine)Ni(acetate)₂] (1465 mg, 5 mmol) in a 9:1 toluene/THF mixture (50 mL) methyl lithium (6.25 mL 1.6 molar in diethyl ether, 10 mmol) was added dropwise under stirring. The mixture was kept at -40°C for 30 min under stirring while the green suspension gradually changed color to yellow brown. The mixture was allowed to warm to -25° C and a solution of 3,5-Diiodo-N-[2,6-bis(3,5-dimethylphenyl)-phenyl]salicylaldimine (3286 mg, 5 mmol) - prepared analogously to example 1 using 3,5-diiodo-N-[2,6-bis(3,5-dimethylphenyl)-phenyl]-amine) - in toluene (10 mL) was added by syringe resulting in a color change to orange-red within 5 min. The mixture was stirred at -25° C for 10 min, pyridine (2 mL, 25.8 mmol) was added by syringe and the mixture was allowed to warm to 25 °C. After removal of all volatiles under vacuum (1*10⁻³ mbar) an orange-red-powdery catalyst formulation comprising the catalyst, lithium acetate and residual traces of toluene was obtained (4725 mg).

### Example 4

### Preparation of the polymers

General procedures for the inventive ethylene polymerization: All ethylene polymerization reactions were conducted either in a Bochi *ecoclave* or a Bochi *miniclave* equipped with a 600 mL or 200 mL steel vessel, respectively, with a mechanical stirrer and a cooling and heating jacket, supplied by a thermostat controlled by a thermocouple dipping into the polymerization mixture. Ethylene uptake of the autoclave was monitored via Bronkhorst mass-flow meters.

The reactor was evacuated and refilled with argon repeatedly and 200 mL toluene (100 mL in the case of the Buchi *miniclave*) was added by cannula transfer. After heating to the desired temperature under stirring with 1000 rounds per minute (rpm) 40 µmol catalyst prepared in example 2 in 2 mL toluene was added and the reactor was pressurized with ethylene to the desired pressure. Polymerization was conducted at constant pressure for 5h. After the reaction was finished, the reactor was vented and the reaction mixture obtained was washed several times with 3M HCl. The organic layer was dried over MgSO₄ and the solvent was removed in vacuum.

The Mₙ was calculated from ¹H NMR intensity ratio of unsaturated end groups versus the overall integral. Furthermore Mₙ and M_{w} were determined with GPC in THF using polystyrene standards. The degree of branching was calculated from ¹H NMR intensity ratio of methyl resonances versa overall integral (corrected for end groups). The percentage of different branch lengths was calculated from relative intensity ratios of the methyl signals of the respective branch (for methyl-, ethyl-, n-propyl- and *sec*-butyl-branches) and the branching C*H* (for longer chain branches n-Bu+) in the ¹³C NMR spectrum.

**Table 1: Examples of polymers according to the invention prepared by the polymerization of ethylene using the catalyst prepared in example 2.**

| **No** | **T [°C]** | **p [bar]** | **yield [g]** | **TON C₂H₄/Ni [mol/mol]** | **Mₙ [g/mol]** | | **M_{w} /Mₙ (GPC)** | **Branches /1000C** | **Type of branches in % of total amount of branches** | | | | |
|---|---|---|---|---|---|---|---|---|---|---|---|---|---|
| | | | | | **(NMR)** | **(GPC)** | | | **Me** | **Et** | **Prop** | **Bu+** | **secBu** |
| **4a** | 60 | 20 | 29.6 | 26,400 | 1,000 | 2,300 | 1.6 | 77 | 69 | 7 | 4.0 | 12 | 8 |
| **4b** | 40 | 20 | 55.0 | 49,100 | 1,600 | 3,500 | 1.7 | 77 | 71 | 8 | 3 | 12 | 6 |
| **4c** | 20 | 20 | 13.2 | 11,800 | 2,600 | 5,900 | 1.7 | 74 | 81 | 5 | 4 | 6 | 4 |
| **4d** | 50 | 10 | 35.0 | 31,300 | 1,100 | 2,500 | 1.7 | 78 | 67 | 10 | 3 | 10 | 10 |

| | | | | | | | | | | | | | |
|---|---|---|---|---|---|---|---|---|---|---|---|---|---|
| **Me = Methyl; Et = Ethyl; Prop = n-Propyl; Bu+ = n-Butyl and Alkyl with more than 4 C-atoms; secBu = sec-Butyl** | | | | | | | | | | | | | |

### Comparative Example 5

Comparative example according to example 4 using 10 µmol of an isolated catalyst prepared according to example 2 but with 3,5-Diiodo-N-[2,6-bis(3,5-diethylphenyl)-phenyl]salicylaldimine instead of 3,5-Diiodo-N-[2,6-bis(3,5-dimethylphenyl)-phenyl]salicylaldimine for 1 h in 100ml toluene (see Table 2).

The Mₙ was calculated from ¹H NMR intensity ratio of unsaturated end groups versus the overall integral. Furthermore Mₙ and M_{w} were determined with GPC in trichlorobenzene using polyethylene standards. The degree of branching was calculated from ¹H NMR intensity ratio of methyl resonances versa overall integral (corrected for end groups). The percentage of different branch lengths was calculated from relative intensity ratios of the methyl signals of the respective branch (for methyl-, ethyl-, n-propyl- and sec-butyl-branches) and the branching C*H* (for longer chain branches n-Bu+) in the ¹³C NMR spectrum.

**Table 2: Properties of a comparative polyethylene prepared in example 5 using an isolated catalyst prepared in example 2 with 3,5-Diiodo-N-[2,6-bis(3,5-diethylphenyl)-phenyl]salicylaldimine.**

| **No** | **T [°C]** | **p [bar]** | **yield [g]** | **TON C₂H₄/Ni [mol/mol]** | **Mₙ [g/mol]** | | **M_{w} /Mₙ (GPC)** | **Branches /1000C** | **Type of branches in % of total amount of branches** | | | | |
|---|---|---|---|---|---|---|---|---|---|---|---|---|---|
| | | | | | **(NMR)** | **(GPC)** | | | **Me** | **Et** | **Prop** | **Bu+** | **secBu** |
| **5** | 30 | 20 | 6.5 | 5,800 | 3,000 | 2,400 | 2.0 | 66 | 91 | 4 | 2 | 2 | 1 |

### Example 6

Preparation of an inventive hyperbranched polyethylene according to example 4a using 106 µmol of the in-situ catalyst mixture prepared in example 3 for 5h in 600ml toluene (see Table 3).

The Mₙ was calculated from ¹H NMR intensity ratio of unsaturated end groups versus the overall integral. Furthermore Mₙ and M_{w} were determined with GPC in THF using polystyrene standards. The degree of branching was calculated from ¹H NMR intensity ratio of methyl resonances versa overall integral (corrected for end groups). The percentage of different branch lengths was calculated from relative intensity ratios of the methyl signals of the respective branch (for methyl-, ethyl-, n-propyl- and sec-butyl-branches) and the branching C*H* (for longer chain branches n-Bu+) in the ¹³C NMR spectrum.

**Table 3: Properties of the homopolymer of ethylene prepared in example 6 using an in-situ catalyst prepared according to example 3.**

| **No** | **T [°C]** | **p [bar]** | **yield [g]** | **TON C₂H₄/Ni [mol/mol]** | **Mₙ [g/mol]** | | **M_{w} /Mₙ (GPC)** | **Branches /1000C** | **Type of branches in % of total amount of branches** | | | | |
|---|---|---|---|---|---|---|---|---|---|---|---|---|---|
| | | | | | **(NMR)** | **(GPC)** | | | **Me** | **Et** | **Prop** | **Bu+** | **secBu** |
| **6** | 60 | 20 | 57,2 | 19,300 | 1,000 | 1,600 | 2.0 | 77 | 65 | 9 | 5 | 9 | 9 |

### Functionalization of the inventive homopolymers of ethylene

The inventive ethylene homopolymers prepared according to examples 4, 5 and 6, respectively, comprise one carbon-carbon double bond per polymer chain which can be a terminal double bond, a vinyl double bond, an unsubstituted internal double bond or a substituted internal double bond. All these are suitable for grafting or functionalization reactions as shown, but not limited to, the following examples 7, 8 and 9.

### Example 7

### General procedure for the polymer functionalization via cross metathesis with ethyl acrylate.

Ethylene polymer prepared according to example 4 was degassed at 50 °C in a Schlenk flask and 5 mol % 4-methoxyphenol and 10 eq ethyl acrylate were added. After dissolving all starting materials in toluene the reaction mixture was heated to 80 °C and Hoveyda-Grubbs II catalyst (0.1 mol %) was added in toluene solution. After 4 hours all volatiles were removed in vacuum. The crude produced was redissolved in toluene and filtered over a short pad of silica. Clean monofunctional product with one terminal and unsaturated ethyl ester group at each polymer chain was obtained after removal of the solvent in vacuum. Via NMR experiments it has been shown that all groups of double bonds were reacted.

### Example 8

### General procedure for the one-pot synthesis of saturated ester functionalized polymers.

10 g ethylene polymer prepared according to example 4 was degassed at 60 °C and 5 mol % 4-methoxyphenol and 10 eq ethyl acrylate were added. After dissolving in 100 mL toluene, the solution was transferred to a *Büchi Limbo* by cannula transfer and heated to 80 °C. A Hoveyda-Grubbs II catalyst toluene solution (0.5 mol %) was added and the reaction was stirred for 4 hours. The catalyst was quenched with 5 mL ethyl vinyl ether and stirred for another 30 min at this temperature. The reactor was pressurized to 40 bar with hydrogen for 24 hours. After cooling to 20 °C the reaction solution was filtered over a pad of silica and all volatiles were removed in vacuum. Clean monofunctional product with one terminal and saturated ethyl ester group at each polymer chain was obtained after removal of the solvent in vacuum. Via NMR experiments it has been shown that all groups of double bonds were reacted.

### Example 9

### General procedure for the epoxidation of double bonds.

In a round bottom flask 50 g of ethylene polymer prepared according to example 4 was dissolved in 350 mL dichloromethane. After addition of 10 g peracetic acid (40 % in acetic acid) the mixture was stirred for 60 min at 40°C. After removal of the solvent the polymer was dissolved in pentane and extracted repeatedly with water to yield epoxidized ethylene polymers with high degrees of functionalization (>95 %).

### Preparation of the defoamer additive

The polymers prepared by the procedure described in the examples 4 and 5, respectively, were formulated according to the following procedure to yield the inventive defoaming compositions.

### Example 10

In a 100mL screw-capped glass bottle equipped with a magnetic stir bar, 59.91 g of a mixture of C₁₀ and C₁₁ isoparaffines, Isopar G, and 0.09 g stabilizer 2,6-di(tert.-butyl)-4-methyl phenol (BHT) were placed. 40.0 g of the polymer prepared in examples 4 and 5, respectively, was added and the mixture was stirred at ambient temperature at approximately 300 rpm for 1 h using a magnetic stirrer. After 1 h, the magnetic stir bar was removed from the mixture and the prepared defoamer formulation was ready to use.

**Table 4: Defoamer compositions prepared from polymers prepared according to examples 4 and 5, respectively.**

| **No** | **Solvent Isopar G** | **Stabilizer BHT** | **Defoaming agent** |
|---|---|---|---|
| **10a** | 59,91%wt | 0,09%wt | 40%wt **4a** |
| **10b** | 59,91%wt | 0,09%wt | 40%wt **4b** |
| **10c** | 59,91%wt | 0,09%wt | 40%wt **4c** |
| **10d** | 59,91%wt | 0,09%wt | 40%wt **4d** |
| **10e** | 59,91%wt | 0,09%wt | 40%wt **5** |

### Example 11

Defoamer formulations prepared according to example 10 were applied to a polyester-melamine topcoat based on Uralac SN 804 (saturated polyester resin 65% weight in Solvesso 150 ND (mixture of high aromatics, distillation range 183 - 194°C, Exxon Mobile)). Table 5 shows the total formulation of the test coating. Initially, the millbase is prepared by loading the components in a screw-capped glass bottle. Then, a 1:1 mixture by weight of the millbase with glass beads was prepared and ground using a Dispermat CV at 40°C and 8000 rpm (18,8m/s) for 20 min. After grinding, the millbase was filtered and cooled to ambient temperature. Then, the let-down was formulated by addition of the components in the bottom part of table 5. The viscosity of the Let-down composition has been adjusted to 100-120s using a DIN 4 cup and Solvesso 150 ND (mixture of high aromatics, distillation range 183 - 194°C, Exxon Mobile). 0.2 and 0.5% weight, respectively, of the defoamer formulation prepared in example 10 based on the Let-down composition were added. The defoamer formulation was incorporated first by hand using a spatula. Then, a dissolver with a toothed blade, 4 cm in diameter, was used for 3 min at 1865 rpm (4 m/s). Then, the finished topcoats were stored over night at room temperature.

**Table 5: Total formulation of the test coating separated in two parts - millbase and let-down.**

| **Millbase** | **%** |
|---|---|
| Uralac SN 804 65% (saturated polyester resin 65% weight in Solvesso 150 ND (mixture of high aromatics, distillation range 183 - 194°C, Exxon Mobile)) | 25.0 |
| DISPERBYK-170 (wetting and dispersing additive, BYK) | 1.5 |
| Solvesso 150 ND (mixture of high aromatics, distillation range 183 - 194°C, Exxon Mobile) | 3.0 |
| Aerosil R 972 (hydrophobic fumed silica, Evonik Ind.) | 0.3 |
| Ti-pure R 960 (rutile titanium dioxide pigment, DuPont) | 30.0 |

| **Let-down** | |
|---|---|
| Uralac SN 804 65% (Saturated polyester resin 65% weight in Solvesso 150 ND (mixture of high aromatics, distillation range 183 - 194°C, Exxon Mobile)) | 24.0 |
| Cymel 303 (cross-linking agent, Cytec) | 8.0 |
| Dynapol Catalyst 1203 (non-ionic blocked sulfonic acid, 50% weight in Xylene, Evonik Ind.) | 4.0 |
| BYK-358N (polyacrylate-based surface additive, BYK) | 0.6 |
| DPM (dipropyleneglycol methyl ether, Dow) | 2.2 |
| Solvesso 150 ND (mixture of high aromatics, distillation range 183 - 194°C, Exxon Mobile) | 1.4 |
| | 100.0 |

### Example 12

### Application conditions using a wire bar coater

One part of the topcoat prepared according to example 11 was mixed with a toothed-bladed dissolver for 1 min at 6000 rpm (6.3 m/s) and immediately applied on the right side of the substrate panel. At the same time, the second part of the paint, which was not mixed with the dissolver, was applied on the left side of the same substrate panel.

| Substrate | Alcan aluminium panels (preprimert) 10*15cm |
|---|---|
| Film thickness wet | 80 µm |
| Peak Metal Temperature | 232°C |
| Oven temperature | 320°C |
| Baking time | 30 s |
| Film thickness dry | app. 20 - 22 µm |

The judgment of the defoamer formulation was made by visual evaluation and by measurement of leveling characteristics using a BYK-Gardner wave-scan *plus* instrument.

**Table 6: Results of wave scan measurements on wire bar coated panels prepared in example 12 with concentrations of 0.2% weight of defoamer compositions on total formulation.**

| | **Defoamer formulation** | Left side topcoat (not mixed) | | Right side topcoat (mixed) | |
|---|---|---|---|---|---|
| **No** | | **long wave** | **short wave** | **long wave** | **short wave** |
| **1** | Control (without defoamer) | 46.5 | 51.1 | 42.6 | 42.4 |
| **2** | +0.2% Tego Airex 922 (polyacrylate defoamer formulation) | 8.8 | 5.3 | 13.7 | 22.3 |
| **3** | +0.2% 10a | 6.9 | 6.2 | 9.4 | 7.9 |
| **4** | +0.2% 10b | 7.7 | 6.5 | 8.8 | 7.7 |
| **5** | +0.2% 10c | 7.0 | 5.7 | 8.6 | 7.5 |
| **6** | +0.2% 10d | 7.0 | 6.5 | 7.8 | 7.5 |
| **7** | +0.2% 10e | 11.0 | 11.9 | 14.8 | 36.9 |

| | | | | | |
|---|---|---|---|---|---|
| Key: Long and short wave number differences at around 2 -3 units are significant. The lower the number, the better the topcoats leveling. | | | | | |

**Table 7: Results of wave scan measurements on wire bar coated panels prepared in example 12 with concentrations of 0.5% weight of defoamer compositions on total formulation.**

| | **Defoamer formulation** | Left side topcoat (not mixed) | | Right side topcoat (mixed) | |
|---|---|---|---|---|---|
| **No** | | **long wave** | **short wave** | **long wave** | **short wave** |
| **1** | Control (without defoamer) | 46.5 | 51.1 | 42.6 | 42.4 |
| **2** | +0.5% Tego Airex 922 (polyacrylate defoamer formulation) | 7.4 | 4.5 | 11.5 | 17.7 |
| **3** | +0.5% 10a | 7.8 | 6.3 | 9.1 | 7.6 |
| **4** | +0.5% 10b | 7.7 | 6.6 | 7.9 | 8.0 |
| **5** | +0.5% 10c | 7.8 | 6.9 | 8.7 | 7.7 |
| **6** | +0.5% 10d | 7.2 | 6.5 | 7.4 | 7.2 |
| **7** | +0.5% 10e | 34.0 | 51.2 | 13.4 | 28.8 |

| | | | | | |
|---|---|---|---|---|---|
| Key: Long and short wave number differences at around 2 -3 units are significant. The lower the number, the better the topcoats leveling. | | | | | |

**Table 8: Results of visual judgment and gloss measurements on wire bar coated panels prepared in example 12 with concentrations of 0.2% weight of defoamer compositions on total formulation.**

| **No** | **Defoamer formulation** | **Visual judgment** | | **Gloss measurement** |
|---|---|---|---|---|
| | | Left side topcoat (not mixed) | Right side topcoat (mixed) | Left side topcoat (not mixed) |
| | | **Leveling** | **Defoaming** | **Gloss 20° / 60°** |
| **1** | Control (without defoamer) | 5 | 5 | 68 / 88 |
| **2** | +0.2% Tego Airex 922 (polyacrylate defoamer formulation) | 1 | 3 | 72 / 90 |
| **3** | +0.2% 10a | 1 | 2-3 | 77 / 92 |
| **4** | +0.2% 10b | 1 | 2 | 77 / 91 |
| **5** | +0.2% 10c | 1 | 2 | 76 / 91 |
| **6** | +0.2% 10d | 1 | 2 | 74 / 91 |
| **7** | +0.2% 10e | 4 | 4-5 | 75 / 91 |

| | | | | |
|---|---|---|---|---|
| Key: 1 = Perfect leveling / no foam, 3 = acceptable leveling / moderate defoaming, 5 = bad leveling / no defoaming | | | | |

**Table 9: Results of visual judgment and gloss measurements on wire bar coated panels prepared in example 12 with concentrations of 0.5% weight of defoamer compositions on total formulation.**

| **No** | **Defoamer formulation** | **Visual judgment** | | **Gloss measurement** |
|---|---|---|---|---|
| | | Left side topcoat (not mixed) | Right side topcoat (mixed) | Left side topcoat (not mixed) |
| | | **Leveling** | **Defoaming** | **Gloss 20° / 60°** |
| **1** | Control (without defoamer) | 5 | 5 | 68 / 88 |
| **2** | +0.5% Tego Airex 922 (polyacrylate defoamer formulation) | 1 | 3 | 70 / 90 |
| **3** | +0.5% 10a | 1 | 2 | 76 / 91 |
| **4** | +0.5% 10b | 1 | 2 | 77 / 91 |
| **5** | +0.5% 10c | 1 | 1-2 | 76 / 91 |
| **6** | +0.5% 10d | 1 | 2 | 76 / 91 |
| **7** | +0.5% 10e | 5 | 4 | 73 / 90 |

| | | | | |
|---|---|---|---|---|
| Key: 1 = Perfect leveling / no foam, 3 = acceptable leveling / moderate defoaming, 5 = bad leveling / no defoaming | | | | |

### Example 13

### Application conditions using a spin coater

The topcoats prepared according to the procedure in example 11 were mixed with a toothed-bladed dissolver for 1 min at 6000 rpm (6.3 m/s) and immediately applied on the substrate panel. The judgment of the defoamer formulation was made by visual evaluation of the leveling and residual foam on the coating.

| Substrate | Alcan aluminium panels (preprimert), 10*15cm |
|---|---|
| Paint quantity | approximately 3g |
| Rotation | 1500 rpm |
| Time | 10 s |
| Film thickness wet | 80 µm |
| Peak Metal Temperature | 232°C |
| Oven temperature | 320°C |
| Baking time | 30 s |
| Film thickness dry | app. 20 - 22 µm |

**Table 10: Results of visual judgment on spin coated panels prepared in example 13 with concentrations of 0.5% weight of defoamer compositions on total formulation.**

| **No** | Defoamer formulation | Defoaming |
|---|---|---|
| **1** | Control (without defoamer) | 5 |
| **2** | +0.5% Tego Airex 922 (polyacrylate defoamer formulation) | 4 |
| **3** | +0.5% 10a | 3 |
| **4** | +0.5% 10b | 3 |
| **5** | +0.5% 10c | 4-5 |
| **6** | +0.5% 10d | 3 |
| **7** | +0.5% 10e | 5 |

| | | |
|---|---|---|
| Key: 1 = Perfect leveling / no foam 3 = acceptable leveling / moderate defoaming 5 = bad leveling / no defoaming | | |

### Example 14

Defoamer formulations prepared according to example 10 were applied to a two-component polyurethane flooring system based on Desmophen 1150 / Desmophen 1145 (both Desmophens: branched polyester/polyether polyol, Bayer Material Science).

**Table 11: Formulation of the flooring system based on Desmophen 1150 / Desmophen 1145.**

| **Raw Material Part A** | **%** |
|---|---|
| Desmophen 1150 (branched polyester/polyether polyol, Bayer Material Science) | 21.48 |
| Desmophen 1145 (branched polyester/polyether polyol, Bayer Material Science) | 21.48 |
| Albolith MS-C-350 (Molecular sieve dispersed in castor oil, Alberdingk Boley) | 8.15 |
| Disperbyk-2155 (wetting and dispersing additive, BYK) | 0.31 |
| Sikron SF 300 (micronized fluor from silica sand, Quarzwerke GmbH) | 43.81 |
| Oxide Green GN-M (green pigment, micronized Powder of Chromium oxide, Bayferrox) | 2.72 |
| Aerosil 300 (hydrophilic fumed silica, Evonik Ind.) | 1.23 |
| Defoamer acc. to example 8 | 1.00 |
| **Total** | **100.00** |
| | |

| **Raw Material Part B** | **%** |
|---|---|
| Hardener Desmodur VL (polyisocyanate, Bayer Material Science) | 23.79 |

Initially, the Raw Material Part A (table 10) was prepared in 50g scale and that mixture was ground using a Dispermat CV for 3 min at 2800rpm (6.6 m/s). Then the Raw Material Part A was left aging for one night before it was combined with Raw Material Part B. That mixture was stirred again using a Dispermat CV at 465 rpm (1.1 m/s) for 1 min. Then, the flooring system composition was poured into the lid of a 860mL plastic cup for curing overnight (film thickness = 2-3mm).

**Table 12: Defoaming performance of defoaming formulations in PU flooring system.**

| **No** | | **Residual foam** | | |
|---|---|---|---|---|
| | | **1 min after pouring into lid** | **after one night** | |
| | | | **Macro foam** | **Micro foam** |
| **1** | Control (without defoamer) | 5 | 4 | 5 |
| **2** | 1% Tego Airex 922 (polyacrylate defoamer formulation) | 4 | 1 | 4-5 |
| **3** | 1% 10a | 2 | 1 | 3-4 |
| **4** | 1% 10b | 2-3 | 1 | 3-4 |
| **5** | 1% 10c | 2-3 | 1 | 3-4 |
| **6** | 1% 10d | 2 | 1 | 4 |
| **7** | 1% 10e | 3 | 1 | 4 |

| | | | | |
|---|---|---|---|---|
| Key: 1 = no foam, 5 = much foam. | | | | |

### Example 15

Defoamer formulations prepared according to example 10 were applied to a two-component Epoxy flooring system based on Araldite GY 793. The Epoxy Part (table 14) including the inventive defoamer formulation was mixed using a Dispermat CV for 20 min at 5000 rpm (12.0 m/s). After grinding, the Epoxy Part was left aging for one night. Then, the Epoxy part of the flooring system composition was combined with the Amine part described in table 12. That mixture was ground again using a Dispermat CV at 3730 rpm (8.8 m/s) for 1 min. Then, the Epoxy flooring system was poured into the lid of a 860mL plastic cup for curing overnight (film thickness = 2-3mm).

**Table 12: Formulation of the Epoxy flooring test system with 0.1% defoamer additive.**

| **Epoxy-Part** | **%** |
|---|---|
| Araldite GY 793 (Epoxy Resin) | 28.25 |
| Millisil W 10 (Quartz powder) | 33.80 |
| Quartz sand F 33 | 36,15 |
| Heucosin Grey G 1792 | 1,70 |
| Defoamer acc. to example 8 | 0,1% |
| **Total** | **100.00** |
| | |

| **Amine-Part** | **%** |
|---|---|
| Aradur 3277 BD (Amine hardener) | 14.28 |

**Table 14: Defoaming performance of 0.1% inventive defoaming formulations in the Epoxy flooring system.**

| **No** | | **Residual foam** | | |
|---|---|---|---|---|
| | | **1 min. after pouring into lid** | **after one night** | |
| | | | **Macro** | **Micro** |
| **1** | Control | 5 | 5 | 1 |
| **2** | 0, 1 % Tego Airex 922 (polyacrylate defoamer formulation) | 1-2 | 1 | 1 |
| **3** | 0,1% 10a | 4 | 1 | 1 |
| **4** | 0,1% 10b | 2-3 | 1 | 1 |
| **5** | 0,1% 10c | 1 | 1 | 1 |
| **6** | 0,1% 10d | 3 | 1 | 1 |
| **7** | 0,1% 10e | 5 | 4-5 | 1 |

| | | | | |
|---|---|---|---|---|
| Key: 1 = no foam, 5 = much foam. | | | | |

## Claims

1. A monounsaturated polymer prepared by homopolymerization of ethylene as the only monomer, and having
(a) one carbon-carbon double bond per polymer chain;
(b) a degree of branching ranging from 10 to 450 branches per 1000 carbon atoms; and
(c) a number average molecular weight from 500 to 10,000 g/mol, **characterized by**
(d) a branching pattern comprising:
i. 60 to 85 % methyl branches
ii. 4 to 10 % ethyl branches
iii. 2 to 4.5 % n-propyl branches
iv. 3 to 15 % secondary butyl branches, and
v. 2 to 15 % n-butyl branches and alkyl branches containing more than 4
carbon atoms, except for secondary butyl branches; and
the degree of branching, the number average molecular weight and the branching pattern being determined by NMR spectroscopy.

2. The monounsaturated polymer according to claim 1, wherein the degree of branching ranges from 60 to 100 branches per 1000 carbon atoms.

3. The monounsaturated polymer according to claim 1 or 2, wherein the number average molecular weight is from 600 to 5,000 g/mol.

4. The monounsaturated polymer according to one or more of claims 1 to 3, wherein the polydispersity index, determined by gel permeation chromatography is from 1 to 10.

5. A polymer obtainable by reacting the carbon-carbon double bond of the monounsaturated polymer of any of claims 1 to 4, in a hydrogenation reaction, a thio-ene reaction, a hydrosilylation reaction, a radical reaction, a cationic or anionic polymerization reaction, an epoxydation reaction, a metathesis reaction with other olefins or an addition reactions, other than the before-mentioned addition reactions.

6. A process for preparing the monounsaturated polymers of one or more of claims 1 to 4 by homopolymerization reaction of ethylene as the only monomer under inert gas atmosphere at a temperature of 10 to 200 °C, a pressure of 1 to 200 bar in the presence of a catalyst, **characterized in that** the catalyst can be obtained by mixing
(a) a Pd(II) or Ni (II) carboxylate complex, with
(b) a neutral or anionic N,O-chelating ligand, and
(c) an organometallic compound other than (a).

7. The process according to claim 6, wherein the catalyst is obtained by mixing
(a) a Ni(II) carboxylate complex, with
(b) a ligand of the class of N-aryl substituted salicylaldimines, and
(c) an alkyl lithium.

8. A defoamer formulation comprising or consisting of
(A) one or more polymers according to any of claims 1 to 5,
(B) a carrier liquid which differs from (A) and
(C)optionally one or more additives differing from (A) and (B) selected from the
group consisting of stabilizers, rheology control additives and hydrophobic solids, the hydrophobic solids being selected from the group consisting of hydrophobic silica, metal stearates, amide waxes and ureas.

9. The defoamer formulation of claim 8, wherein the carrier liquid is selected from aliphatic and/or aromatic hydrocarbons.

10. The defoamer formulation according to claim 8 or 9, wherein (A) is present in an amount of 0.01 to 90 % by weight, (B) is present in an amount of 10 to 99.9 % by weight and (C) is present in an amount of 0 to 10 % by weight, all amount being based on the total weight of the defoamer formulation.

11. Use of a polymer according to any of claims 1 to 5 as defoaming agents or in the manufacture of a defoamer formulation.

12. Use of a defoamer formulation according to any of claims 8 to 10 as foam preventing or foam reducing additive in the manufacture of liquid compositions.

13. The use according to claim 12, wherein the liquid composition is selected from coatings, paints, flooring formulations and resin formulations.

14. The use of any of claims 12 or 13, wherein the defoamer formulation is used in an amount that the therein contained polymers according to claims 1 to 5 are contained in the liquid composition in an amount from 0.01 to 5 % by weight, based on the total weight of the liquid composition.

15. A liquid composition containing one or more of the polymers according to any of claims 1 to 5 in an amount of 0.01 to 5 % by weight based on the total weight of the liquid composition.

16. The liquid composition according to claim 15, wherein the liquid composition is selected from coatings, paints, flooring formulations and resin formulations.
